# EUROPÄISCHE PATENTSCHRIFT

(11) **EP 3 777 755 B1**
(45) Veröffentlichungstag und Bekanntmachung des Hinweises auf die Patenterteilung: **15.02.2023**
(21) Anmeldenummer: 20198707.0
(22) Anmeldetag: 24.07.2017
(51) Int. Cl.: A61C 8/00

(54) **DENTALIMPLANTAT UND DENTALIMPLANTATSYSTEM**
DENTAL IMPLANT AND DENTAL IMPLANT SYSTEM
IMPLANT DENTAIRE ET SYSTÈME D'IMPLANT DENTAIRE

(30) Priorität: 29.07.2016 CH 10002016
(43) Veröffentlichungstag der Anmeldung: 17.02.2021
(62) Teilanmeldung aus: 17182831.2
(73) Patentinhaber: Woodwelding AG, 6362 Stansstad (CH)
(72) Erfinder: Thomke, Ernst, 2540 Grenchen (CH)
(74) Vertreter: Frei Patent Attorneys

(56) Entgegenhaltungen:
- WO-A1-2005/079696
- WO-A1-2011/054123
- WO-A2-2008/034276

## Beschreibung

Die Erfindung liegt auf dem Gebiet der Dentalimplantatsysteme.

Unter den Dentalimplantatsystemen sind sogenannt einteilige und sogenannt zweiteilige Implantatsysteme bekannt.

In einteiligen Dentalimplantsystemen besitzt das eigentliche Dentalimplantat - welches in den Kieferknochen implantiert wird und der Verankerung einer funktionellen Suprakonstruktion dient, bspw. einer Krone, Brücke oder Prothese - eine nach der Implantation von koronal her zugängliche Struktur, auf welcher das Aufbauteil direkt befestigt werden kann.

In zweiteiligen Dentalimplantaten ist neben dem eigentlichen Implantat (auch "Verankerungsteil" oder, wenn es mit einem Gewinde versehen ist, "Schraube" genannt) ein zur Befestigung daran vorgesehenes Aufbauteil ("Abutment") notwendig. Das Verankerungsteil kann dabei so ausgestaltet sein, dass es ungefähr bündig mit der Knochenoberfläche eingebracht wird (als ein sogenanntes "bone-level"-Implantat), oder es kann mit einem Bereich koronal der Knochenoberfläche versehen sein, der oft gegenüber dem enossalen, i.a. mit einem Gewinde versehenen Bereich aufgeweitet ist, manchmal als "Tulpe" bezeichnet wird und vorgesehen ist, bis ungefähr zur Zahnfleischoberfläche zu reichen. Implantate mit einem solchen transgingivalen Bereich werden "tissue level"-Implantate genannt. Der aus dem Zahnfleisch herausragende Bereich ("Pfosten"), welcher dem Befestigen einer Suprakonstruktion, also einer Krone, Brücke oder Prothese oder dergleichen, dient, wird in zweiteiligen Implantatsystemen durch das Abutment gebildet.

Aus WO 02/069 817 ist unter anderem ein Dentalimplantat bekannt, welches aus einem thermoplastischen oder thixotropen Material besteht. Dieses Material wird für die Verankerung unter Ultraschall-Vibrationen in einer linearen Bewegung nach apikal in den Kieferknochen hineingedrückt, wodurch es im fliessfähigen Zustand in Poren des Knochens gepresst wird und dort verankert wird. Zur koronalen Seite hin weist es eine Struktur auf, in welche ein künstlicher Zahn einschraubbar ist. Bei einem solchen System muss, wenn der künstliche Zahn anatomisch sinnvoll geformt ist, die Orientierung des Implantats nach der Implantation definiert sein. Auch WO 2004/017857 lehrt Implantate, darunter Dentalimplantate, bei welchen eine Verankerung im Knochen durch das Verflüssigen von thermoplastischem oder thixotropem Material und das anschliessende Verfestigen in einem Zustand, in welchem das Knochengewebe interpenetriert ist, bewirkt wird. Gemäss WO 2004/017857 besitzt das Implantat zusätzlich zum thermoplastischen oder thixotropen Material einen Teil, der einen Oberflächenbereich aus einem nicht verflüssigbaren Material bildet, welcher Bereich auch nach der Implantation frei von verflüssigtem Material bleibt. Ähnlich lehrt auch WO 2005/079696 solche Implantate, die sich jedoch dadurch auszeichnen, dass beim Einbringen durch die lineare Bewegung nach apikal Knochengewebe abgetragen wird. WO 2005/079696 lehrt auch Ausführungsformen, in denen thermoplastisches oder thixotropes Material in einen Hohlraum gebracht und von diesem nach der Verflüssigung durch Austrittsöffnungen ins umliegende Gewebe eindringt. WO 2005/079696 lehrt, diesen Hohlraum nach der Implantation dicht abzuschliessen. Gemäss WO2011/054122 und WO2011/054123 schliesslich, werden chirurgische Implantate durch thermoplastisches Material verankert, welches in einem fliessfähigen Zustand in den Knochen hineingedrückt wird, wobei das chirurgische Implantat eine Hülse mit einer longitudinalen Öffnung bildet, in welche ein thermoplastisches Element eingeführt wird und gegen deren distales Ende das Element für die Verflüssigung gedrückt wird.

Die Verankerung der Dentalimplantate gemäss WO 02/069 817, WO 2004/017857 und WO 2005/079696 ist vorteilhaft, da die Dentalimplantate unmittelbar nach der Implantation stabil verankert sind und die Verankerung sofort belastbar ist, was im Vergleich für die Patientin oder den Patienten ganz erhebliche Vorteile bringt. Der Stand der Technik setzt im Unterschied dazu ein langwieriges Einheilen voraus, bevor Dentalimplantate belastet werden können. Die genannten Systeme besitzen aber alle den Nachteil, dass auf ihrer Basis die Befestigung der Suprakonstruktion nicht bzw. nicht auf für jede Situation befriedigende Art lösbar ist. Ausserdem ergeben sich Probleme bei der Akzeptanz der primären Verankerung durch die anwendenden Implantologen, da für manche mindestens subjektiv die Stärke der Verankerung auf die in den Dokumenten gelehrte Weise nicht gewährleistet scheint.

Es ist eine Aufgabe der Erfindung, ein Implantationsset gemäß Anspruch 1 zur Verfügung zu stellen, das Nachteile des Standes der Technik überwindet und insbesondere eine Implantation mit sofortiger primärer Stabilität ermöglicht ohne die Nachteile des diesbezüglichen Standes der Technik in Kauf nehmen zu müssen.

Gemäss einem **erstem Aspekt** der Offenbarung wird ein Dentalimplantat zur Implantation im Kieferknochen zwecks indirekter (über ein Abutment) oder direkter Befestigung einer Suprakonstruktion zur Verfügung gestellt, welches Implantat aufweist:
- Einen Implantatkörper, welcher sich zwischen einem koronalen und einem apikalen Ende erstreckt und eine enossale Aussenfläche definiert, wobei der Implantatkörper einen nach koronal offenen Hohlraum sowie mindestens eine Austrittsöffnung von einem Innern zur enossalen Aussenfläche aufweist,
- und ein thermoplastisches Element im Festzustand, welches im Hohlraum angeordnet oder in diesen einbringbar ist, wobei das thermoplastische Element durch Anlegen einer nach apikal in den Hohlraum hinein gerichteten Presskraft und von mechanischen Schwingungen (bspw. mit Frequenzen zwischen 10 und 100 kHz) in einen mindestens teilweise fliessfähigen Zustand bringbar ist und in diesem Zustand mindestens ein Anteil von fliessfähigem Material des thermoplastischen Elements aufgrund der Presskraft durch die mindestens eine Austrittsöffnung in umgebendes Knochengewebe pressbar ist, wenn die Implantatkörper in einer Öffnung im Knochengewebe angeordnet und die enossale Aussenfläche mit Knochengewebe in Kontakt ist. Nach der erneuten Verfestigung des thermoplastischen Materials nach dem Ausschalten der Vibrationen bewirkt das eine Verankerung durch die so bewirkte Verbindung zwischen interpenetriertem Gewebe einerseits und Implantatkörper andererseits durch das beide durchdringende thermoplastische Material.

Weiter weist der Implantatkörper ein Aussengewinde auf. Zur koronalen Seite hin ist eine Struktur zur Befestigung eines Abutments oder einer Suprakonstruktion vorhanden.

In vielen Ausführungsformen ist die Struktur zur Befestigung des Abutments oder der Suprakonstruktion mindestens teilweise im genannten Hohlraum vorhanden und/oder wird durch diesen durchdrungen.

Für die Befestigung des Abutments bzw. der Suprakonstruktion kann dieses durch eine Bewegung in axialer Richtung auf das Dentalimplantat aufsteckbar sein, und zwar insbesondere in einer Mehrzahl von möglichen Orientierungen, beispielsweise in einer endlichen Anzahl von möglichen Orientierungen oder mit einem beliebigen Drehwinkel um eine Achse des Dentalimplantats.

Die Kombination der vorstehend erklärten zusätzlichen Verankerung durch das thermoplastische Material, welches durch die mindestens eine Austrittsöffnung nach aussen ins umliegende Gewebe gepresst wird, mit einer Struktur zur Befestigung eines Abutments oder einer Suprakonstruktion, welche mindestens teilweise im genannten Hohlraum vorhanden ist und/oder durch diesen durchdrungen wird, kann vorteilhaft sein unabhängig davon, ob ein Aussengewinde vorhanden ist oder nicht. Beispielsweise kann der Implantatkörper so strukturiert sein dass er durch Einhämmern in den Knochen eingebracht wird und dort durch einen Presssitz gehalten wird. Anschliessend erfolgt die zusätzliche Verankerung wie vorstehend beschrieben.

Gemäss einem zweiten Aspekt der Offenbarung wird daher ein Dentalimplantat zur Implantation im Kieferknochen zwecks Befestigung einer Suprakonstruktion zur Verfügung gestellt, welches Implantat aufweist:
- Einen Implantatkörper, welcher sich zwischen einem koronalen und einem apikalen Ende erstreckt und eine enossale Aussenfläche definiert, wobei der Implantatkörper einen nach koronal offenen Hohlraum sowie mindestens eine Austrittsöffnung von einem Innern zur enossalen Aussenfläche aufweist,
- und ein thermoplastisches Element im Festzustand, welches im Hohlraum angeordnet oder in diesen einbringbar ist, wobei das thermoplastische Element durch Anlegen einer nach apikal in den Hohlraum hinein gerichteten Presskraft und von mechanischen Schwingungen in einen mindestens teilweise fliessfähigen Zustand bringbar ist und in diesem Zustand mindestens ein Anteil von fliessfähigem Material des thermoplastischen Elements aufgrund der Presskraft durch die mindestens eine Austrittsöffnung in umgebendes Knochengewebe pressbar ist, wenn der Implantatkörper in einer Öffnung im Knochengewebe angeordnet und die enossale Aussenfläche mit Knochengewebe in Kontakt ist,
- wobei der Implantatkörper eine Befestigungsstruktur zur Befestigung eines Abutments oder einer Suprakonstruktion aufweist, welche mindestens teilweise im genannten Hohlraum vorhanden ist und/oder durch diesen durchdrungen wird.

Für beide Aspekte gilt gegebenenfalls: Gehört das Dentalimplantat zu einem zweiteiligen Implantatsystem, kann insbesondere der Hohlraum in einem koronalen Bereich die Struktur zur Befestigung des Abutments bilden, bspw. indem ein Befestigungspfosten des Abutments im zusammengesetzten Zustand in den Hohlraum hineinragt.

Der Hohlraum kann zum Zweck der Befestigung des Abutments eine in Bezug auf axiale Richtungen hinterschnitten Struktur (dazu gehören auch ein Innengewinde oder eine mindestens teilweise in Umfangsrichtung verlaufende Leimnut), aufweisen, welche eine Sicherung des Abutments auf Zug in axiale Richtungen ermöglicht, bspw. mittels einer Abutmentschraube, mittels eines Einsatzelements, an welchem das Abutment fixierbar ist und/oder durch Kleben, wobei der Hinterschnitt eine kombiniert stoffschlüssig-/formschlüssige Verbindung ergibt.

Ergänzend oder alternativ kann der Hohlraum koronal einen Abstützbereich aufweisen, in dem sie einen sich nach koronal vergrössernden, insbesondere stetig vergrössernden Querschnitt aufweist und durch welchen Kräfte in axialer Richtung von der Suprakonstruktion, gegebenenfalls über das Abutment, in das eigentliche Implantat eingeleitet werden können. Ein solche Abstützbereich kann bspw. konisch oder auch im axialen Längsschnitt leicht konkav gekrümmt verlaufen.

Ergänzend oder alternativ kann der Hohlraum eine Eindrehgeometrie- und/oder Verdrehsicherungsstruktur ausbilden, d.h. in einem axialen Tiefenbereich ist sie nicht rotationssymmetrisch ausgebildet, sondern weist bspw. eine n-zählige Drehsymmetrie auf, wobei n eine natürlichen Zahl grösser als 1 ist, insbesondere eine natürliche Zahl zwischen 2 und 10.

In diesen Ausführungsformen bilden also der Hohlraum für den Thermoplasten und für eine Sonotrode, durch welche der Thermoplast nach apikal gepresst und mit mechanischer Schwingungsenergie beaufschlagt wird, und die an sich bekannte Ausnehmung für die Befestigung und ggf. Verdrehsicherung des Abutments sowie des Eindrehwerkzeugs ein gemeinsames Lumen.

Auch für einteilige Dentalimplantatsysteme besteht die Option, die Befestigungstruktur mindestens teilweise im Hohlraum vorzusehen und ggf. mit den genannten Merkmalen auszustatten, indem unmittelbar die Suprakonstruktion mit einem Befestigungspfosten versehen wird, welcher in den Hohlraum eingreift.

Gemäss einer zweiten Option ist das einteilige Dentalimplantatystem mit einem vom Gingivaniveau nach koronal ragenden Befestigungspfosten versehen, durch welchen ein koronaler Abschnitt des genannten Hohlraums verläuft.

In der Summe ergibt sich gemäss dem ersten und/oder zweiten Aspekt so ein System, welches kombiniert eine Reihe von wichtigen Vorteilen aufweist:
- Das Verankerungsvermögen der klassischen Gewindeverankerung wird gegebenenfalls genutzt; bei Implantatkörpern ohne Aussengewinde erfolgt mindestens eine initiale Presspassung und in beiden Fällen nach dem Einwachsen eine Osseointegration
- Da das Abutment bzw. die Suprakonstruktion in einer wählbaren Orientierung aufgesteckt wird, muss die Orientierung des Implantats um seine Achse nicht definiert sein. Gegebenenfalls kann daher der Implantologe beim Einschrauben das Implantat genau auf die gewünschte Tiefe setzen.
- Durch die zusätzliche Verankerung mittels des Thermoplasten ergibt sich eine unmittelbare, primäre Stabilität, durch welche auch dann unerwünschte grössere Bewegungen des Implantats im Knochengewebe verhindert werden, wenn das Implantat sofort nach der Implantation belastet wird.
- Die Verankerung durch den Thermoplasten weist jedoch eine gewisse Elastizität auf, welche Mikrobewegungen relativ zum Knochen zulässt, was knochenwachstumsfördernd wirkt.
- Die Kombination des Gewindes bzw. der Presspassung mit der Verankerung durch den Thermoplasten durch die Austrittsöffnung hindurch ermöglicht, dass der Thermoplast erst ausgebracht wird, wenn der Implantatkörper in einer definierten und stabilen Position ist. Im Gegensatz zu einem Einbringen des Implantatkörpers durch axiale Bewegung ergibt sich so kein Verschmieren des Thermoplasten, wodurch bspw. die Bereiche koronal de Austrittsöffnung /der Austrittsöffnungen frei von thermoplastischem Material bleiben. Dadurch kann erstens die mindestens eine Austrittsöffnung relativ tief apikal angeordnet sein, wo der Knochen eher spongiös ist und daher eine besonders tiefe Verankerung Durchdringung durch den Thermoplasten möglich ist und zweitens kann der Knochen gut in die Strukturen des Implantatkörpers einheilen, ohne dass Gefahr besteht, dass zwischen Knochen und Implantatkörper thermoplastisches Material ist.

Insbesondere kann die mindestens eine Austrittsöffnung im Implantatkörper relativ weit apikal angeordnet sein, bspw. in der unteren Hälfte oder gar dem unteren Drittel des enossalen Bereichs (die Abgrenzung zwischen enossalem Bereich und übrigen Bereichen ist eine Eigenschaft des Implantats). Das Gewinde erstreckt sich mindestens über einen Bereich koronal der Austrittsöffnung und kann sogar auf Bereiche koronal der Austrittsöffnung beschränkt sein.
- Die Anordnung des Hohlraums durch die Struktur zur Befestigung eines Abutments oder einer Suprakonstruktion hindurch oder diese integrierend ergibt einen Synergieeffekt. So kann der Hohlraum in einem koronalen Bereich eine Abstützung und/oder Rotationssicherung für das Abutment bilden und optional in einem mittleren Bereich noch eine Struktur aufweisen, welche eine Verankerung des Abutments und/oder der Suprakonstruktion auf Zug ermöglicht. Insbesondere muss es nicht notwendig sein, den Hohlraum vor der Befestigung des Abutments bzw. der Suprakonstruktion vollständig abdichtend zu füllen. Die Dichtwirkung des Thermoplasten einerseits und der finalen Befestigung von Suprakonstruktion und ggf. Abutment reicht unter Umständen aus, um zu verhindern, dass durch den Hohlraum hindurch schädliche Keime in Kontakt mit dem Knochen gelangen können.
- Die Verankerung durch den Thermoplasten kann ausserdem eine zusätzliche sterilisierende Wirkung haben, wird doch der Thermoplast bei der Verankerung sehr lokal im Ort des Interfaces mit dem Knochen heiss und sorgt so für Keimfreiheit. Da die Erwärmung nur sehr lokal erfolgt, ist trotzdem keine substantielle Nekrose im Bereich des Thermoplasten zu erwarten.

In Ausführungsformen gehört das Dentalimplantat wie bereits vorstehend erwähnt zu einem zweiteiligen Dentalimplantatsystem, welches ferner ein Abutment aufweist, d.h. ein Aufbauteil, welches mit dem Dentalimplantat zusammenwirkt um auf diesem verankert zu werden und welches eine Struktur aufweist, welche die Befestigung einer Suprakonstruktion ermöglicht, bspw. einen Pfosten. Zweiteilige Dentalimplantatsysteme sind insbesondere deshalb populär, weil sie ermöglichen, dass das eigentliche Dentalimplantat nach der Implantation einheilen kann, ohne Belastungen beim Kauen ausgesetzt zu sein. Bei subgingivalen Implantaten kann zu diesem Zweck nach der Implantation das Zahnfleisch über dem Implantat vernäht werden; und transgingivale Implantate werden oft provisorisch durch eine Kappe versorgt. Die erfindungsgemässe Verankerung mittels des Thermoplasten bringt es mit sich, dass das Implantat unmittelbar nach der Implantation belastbar ist, d.h. die Probleme, die im Stand der Technik zur Bevorzugung von zweiteiligen Implantaten führen, existieren für sie nicht. Trotzdem kann beim erfindungsgemässen Vorgehen die Zweiteiligkeit von Vorteil sein, insbesondere weil das Abutment in einem wählbaren Drehwinkel anordenbar ist und daher die vorstehenden Vorteile betreffend fehlende Notwendigkeit einer Definition der Orientierung des Implantats greifen.

Nachfolgendes gilt für ein- und zweiteilige Ausführungen gemäss beiden Aspekten:
Mindestens in einem apikalen Bereich kann der Hohlraum bis zu seinem apikalen Ende beispielsweise im Wesentlichen zylindrisch verlaufen.

Apikal der mindestens einen Austrittsöffnung ist der Hohlraum im Allgemeinen durch eine Anstosspartie begrenzt, d.h. sie ist nicht axial durchgehend. Die Anstosspartie kann eine Energierichtungsgeberstruktur aufweisen, bspw. indem sie zur Mitte (in Bezug auf radiale Richtungen) hin erhöht ist und bspw. zugespitzt ist oder eine Kante bildet.

Wenn mehr als eine Austrittsöffnung vorhanden ist - in vielen Ausführungsformen sind mindestens zwei Austrittsöffnungen vorhanden - können diese auf derselben Höhe angeordnet sein (im Wesentlichen dieselbe axiale Position aufweisen). Wenn mehr als eine Austrittsöffnung vorhanden ist, sind die Austrittsöffnungen bevorzugt in unterschiedlichen Positionen entlang des Umfangs angeordnet und bspw. in Umfangsrichtung gleichmässig verteilt. Es können insbesondere zwei Austrittsöffnungen vorhanden sein, die einander gegenüberliegend angeordnet sind, auch drei oder vier regelmässig in Umfangsrichtung verteilte Austrittsöffnungen sind eine Option.

Der Implantatkörper kann keramisch oder metallisch sein. Er kann beispielsweise aus einer Zirkonoxidkeramik gefertigt sein, insbesondere einer insbesondere eine Yttrium-stabilisierten Zirkonoxid-basierten Keramik. Alternativ kann der Implantatkörper auch aus einem anderen Werkstoff sein, beispielsweise aus einer anderen Keramik, insbesondere auf Aluminiumoxid-Basis, oder aus einem Metall, bspw. Titan oder einer Titanlegierung.

Der enossale Bereich des Implantatkörpers, insbesondere gegebenenfalls der mit einem Aussengewinde versehene Bereich, kann aufgeraut sein, durch ein abtragendes Verfahren und/oder eine geeignete Beschichtung. Dadurch wird die Einheilung des Knochens begünstigt. In Ausführungsformen des Implantatkörpers als keramischer Implantatkörper kann die Rauigkeit selektiv nur an Orten von lokalen Erhebungen, bspw. auf Gewindekuppen, und nicht in Vertiefungen dazwischen vorhanden sein, bspw. gemäss der Lehre von WO 2011/054 119.

Im enossalen Bereich können aussenseitig weitere Strukturen an sich bekannter Art angeordnet sein, bspw. Spannuten.

Die Offenbarung betrifft auch ein zweiteiliges Dentalimplantatsystem mit einem entsprechend angepassten Abutment oder einer Suprakonstruktion.

Weiter betrifft die Erfindung ein Implantationsset mit einem Dentalimplantat der vorstehend beschriebenen Art mit Implantatkörper und thermoplastischem Element und zusätzlich zum Implantatkörper und dem thermoplastischen Element eine Führungshülse, um beim Einführen das thermoplastische Element zu führen und insbesondere um die Sonotrode zu führen und den Implantatkörper vor Einwirkungen der vibrierenden Sonotrode zu schützen.

Eine solche Führungshülse besitzt ein von koronal nach apikal durchgehendes Führungslumen (d.h. ein durchgehendes Innenvolumen, in welchem und/oder durch welches hindurch das thermoplastische Element führbar ist). Dieses kann einen entlang der Achse konstanten Querschnitt aufweisen, d.h. zylindersymmetrisch sein, auch dann, wenn der Hohlraum verschiedene Bereiche mit verschiedenen Querschnitten aufweist. Es kann bspw. einen kreisrunden Querschnitt aufweisen, d.h. rotationssymmetrisch um die Achse sein. Das Führungslumen kann passgenau auf eine distale (in der Anwendung apikale) Partie der Sonotrode abgestimmt sein, welche in die Führungshülse einführbar ist, wobei die Sonotrode ein leichtes Untermass hat. Durch eine solche im Wesentlichen passgenaue Führung kann ein Zurückfliessen von thermoplastischem Material nach koronal gegen Ende des Verflüssigungsprozesses verhindert werden.

Die Führungshülse kann optional eine koronale Aufweitung ausbilden (optional aber ohne dass sich auch das Führungslumen entsprechend aufweitet) um am Implantat abstützbar zu sein. Die koronoale Aufweitung kann bspw. eine Schulter ausbilden, welche an einer koronalen Endfläche des Implantatkörpers abstützbar ist, oder sie kann eine entsprechend einer (optionalen) Aufweitung des Hohlraums ausgebildet sein, wodurch die Hülse auf dieselbe Weise abgestützt wird, wie später das Abutment. Ergänzend oder alternativ kann, wenn der Hohlraum des Implantats zum Zweck der Befestigung des Abutments eine in Bezug auf axiale Richtungen hinterschnitten Struktur aufweist, die Führungshülse aussenseitig eine dieser Struktur entsprechende Befestigungspartie aufweisen.

Zusätzlich zum Dentalimplantat bzw. zum Dentalimplantatsystem kann ein Implantationsset aufweisen:
- Ein Eindrehwerkzeug, welches ausgebildet ist, in einen nicht drehsymmetrischen Bereich des Hohlraums einzugreifen um das Implantat durch eine Schraubbewegung in den Kieferknochen einzuschrauben, und/oder
- Eine Sonotrode, welche ausgeformt ist, von koronal her in den Hohlraum einzugreifen und die mechanischen Schwingungen sowie die Presskraft anzulegen.

Eine solche Sonotrode kann insbesondere einen distalen Bereich aufweisen, dessen Form auf das Führungslumen der Führungshülse abgestimmt ist, bspw. passgenau aber mit leichtem Untermass.

Eine solche Sonotrode kann direkt an ein Gerät zur Erzeugung der mechanischen Schwingungen koppelbar sein, oder es kann ein Zwischenteil zwischen einem solchen Gerät und der Sonotrode verwendet werden, bspw. zum Umlenken der Schwingungen. Ein solches Zwischenteil ist bspw. in WO 2007/101 362 offenbart.

Nachfolgend werden Ausführungsbeispiele der Erfindung anhand von Figuren näher erläutert. In den Figuren bezeichnen gleiche Bezugszeichen gleiche oder analoge Elemente. Es zeigen:
- Fig. 1a-1c: Schnittdarstellungen eines Implantatkörpers während unterschiedlichen Stadien während der Implantation;
- Fig. 2: ein passendes Abutment;
- Fig. 3a- 3c: einen alternativen Implantatkörper sowie einen alternativen Querschnitt im Verdrehsicherungsbereich;
- Fig. 4: ein dazu passendes Abutment;
- Fig. 5: einen weiteren Implantatkörper, erneut im axialen Längsschnitt gezeichnet;
- Fig. 6: ein Einsatzelement für einen Implantatkörper gemäss Fig. 5;
- Fig. 7: ein Abutment mit Abutmentschraube;
- Fig. 8: einen Implantatkörper mit Innengewinde;
- Fig. 9: einen Implantatkörper eines Implantats für ein einteiliges System;
- Fig. 10: einen Implantatkörper ohne Aussengewinde für ein zweiteiliges System;
- Fig. 11: einen Implantatkörper mit eingeführter Führungshülse;
- Fig. 12: eine Dentalimplantat mit Führungshülse; und
- Fig. 13-15: alternative Führungshülsen.

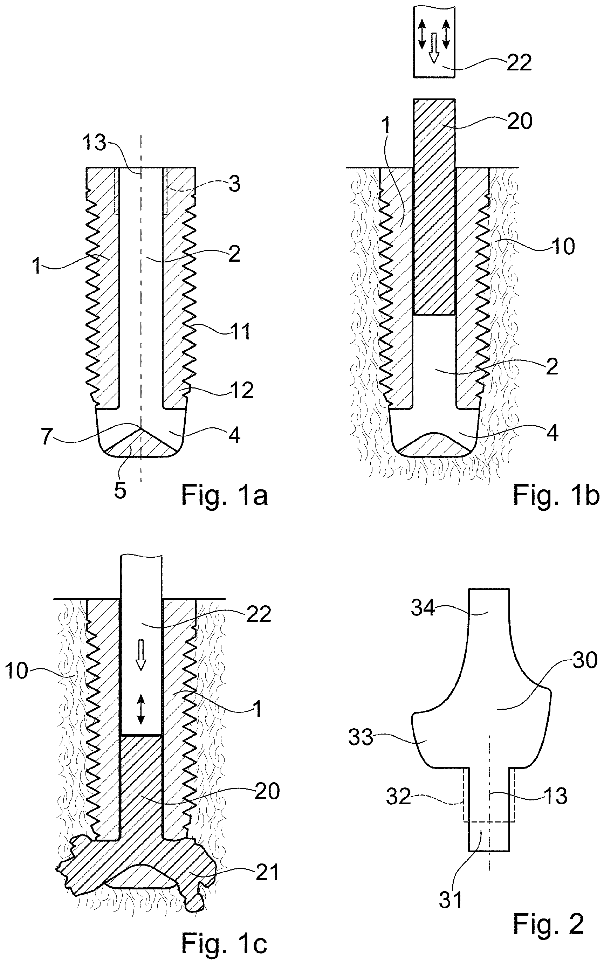

**Figur 1a** zeigt im Schnitt entlang der Implantatachse 13 (entsprechend der Gewindeachse) einen Implantatkörper 1 eines Dentalimplantats, das hier das Verankerungsteil eines zweiteiligen Dentalimplantatsystems bildet. Bei der in Fig. 1a gezeichneten Ausführungsform handelt es sich um ein "tissue level"-Dentalimplantat, welches bei der Implantation so weit ins Knochengewebe eingebracht wird, dass das koronale (in Fig. 1a oberseitig dargestellte) Ende ungefähr auf Höhe des Knochenkamms liegt, weshalb auch die Mantelfläche bis fast zum koronalen Ende hin aufgeraut und/oder beschichtet sein kann, um ein Einwachsen in den Knochen zu begünstigen. Der Implantatkörper 1 weist ein Aussengewinde 11 auf, welches sich hier praktisch über die ganze Länge fast bis zum koronalen Ende erstreckt. Aussenseitig sind ausserdem optionale apikale Spannuten 12 vorhanden.

Der Implantatkörper hat eine sich als Ganzes bis auf die Gewindevertiefungen und die Spannuten im Wesentlichen zylindrische Form die apikal in eine sich leicht verjüngenden Form übergeht. Das Aussengewinde 11 hat eine nicht-konstante Gewindetiefe und kann selbstschneidend ausgebildet sein.

Der Implantatkörper 1 ist beispielsweise aus einer Zirkonoxidkeramik gefertigt, insbesondere einer insbesondere eine Yttrium-stabilisierten Zirkonoxid-basierten Keramik. Generell gilt die Lehre, welche hier anhand von Ausführungsbeispielen beschrieben wird, aber auch für Implantatkörper aus einem anderen Werkstoff, beispielsweise aus einer anderen Keramik, insbesondere auf Aluminiumoxid-Basis, oder aus einem Metall, bspw. Titan oder einer Titanlegierung.

Vom koronalen Ende nach apikal erstreckt sich parallel zur Achse 13 ein zum koronalen Ende hin offener Hohlraum 2, der sich fast über die ganze Länge des Implantats erstreckt und nach apikal durch eine Anstosspartie 5 begrenzt wird. Vom Hohlraum 2 radial nach aussen zur Aussenfläche (Mantelfläche) hin sind zwei einander gegenüberliegende Austrittsöffnungen 4 ausgebildet. Die Anstosspartie 5 ist zur Mitte hin leicht zugespitzt, so dass sich ein Energierichtungsgeber 7 ausbildet, dessen Funktion nachstehend noch erläutert wird.

Zum koronalen Ende hin kann der Hohlraum eine in Fig. 1a nur gestrichelt dargestellte Aufweitung 3 aufweisen, die nicht um die Achse 13 drehsymmetrisch ist, so dass ein passend ausgestaltetes Eindrehwerkzeug in sie eingreifen kann, um den Implantatkörper - bevorzugt nach Vornahme einer Vorbohrung - mittels des Aussengewindes 11 in das Knochengewebe einzudrehen. Im Querschnitt kann der Hohlraum im Bereich der Aufweitung 3 insbesondere eine n-zählige Symmetrie aufweisen, bspw. 3-zählig, 4-zählig, 5-zählig, 6-zählig, 7-zählig oder 8-zählig. Sie kann im Querschnitt bspw. die Form eines n-zähligen Vielecks mit abgerundeten Ecken aufweisen; auch andere Querschnittsformen, bspw. eine Torx-ähnliche Form, sind möglich. Sowohl im Bereich der Aufweitung 3 als auch apikal davon kann der Hohlraum je ungefähr zylindrisch, d.h. entlang der Achse translationssymmetrisch verlaufen, wobei auch eine leicht nach apikal zulaufende Form nicht ausgeschlossen ist, und wobei, wie in nachstehenden Beispielen zu sehen, weitere, unter Umständen auch nicht zylindrische Partien vorhanden sein können.

**Figur 1b** zeigt den Implantatkörper 1 in Knochengewebe 10 eingeschraubt, zusammen mit dem thermoplastischen Element 20, das von koronal her in den Hohlraum 2 einführbar ist. Ausserdem ist eine Sonotrode 22 mit einem auf den Hohlraum angepassten Querschnitt angedeutet. Der Querschnitt der Sonotrode 22 ist so, dass diese im Wesentlichen ohne Kraftaufwand in den Hohlraum 2 einschiebbar ist, wenn dieser frei ist.

Das thermoplastische Element 20 ist im Wesentlichen stiftförmig ausgebildet, beispielsweise zylindrisch, mit einem auf den Hohlraum und insbesondere dessen apikalen Bereich angepassten Querschnitt. Das thermoplastische Element kann insbesondere kreiszylindrisch ausgebildet sein.

Wie in **Figur 1c** gezeigt wird zur Verankerung zusätzlich zur Verankerung durch das Einschrauben das thermoplastische Element 20 durch die Sonotrode 20 nach apikal gegen die Anstosspartie 5 gedrückt, während die Sonotrode mit mechanischen Schwingungen beaufschlagt wird, wodurch das thermoplastische Material des thermoplastischen Elements 20 im Kontakt mit der Anstosspartie 5 erwärmt wird, bis es fliessfähig ist und aufgrund des Anpressdrucks durch die Austrittsöffnungen 4 nach aussen verdrängt und in Strukturen des Knochengewebes gedrückt wird. Der Energierichtungsgeber 7 kann dabei bewirken, dass die Energieabsorption anfangs primär in Kontakt mit diesem stattfindet, wodurch sich das thermoplastische Material zunächst dort am meisten erwärmt. Weil die innere Reibung des thermoplastischen Materials viel höher ist, wenn dieses eine höhere Temperatur hat (bspw. bei amorphen Thermoplasten wenn es über der Glasübergangstemperatur liegt), wird auch anschliessend schwerpunktmässig am apikalen Ende Energieabsorption stattfinden, wodurch gewährleistet wird, dass im Bereich der Austrittsöffnungen 4 verflüssigt wird.

Während dieses Prozesses verschiebt sich das Interface zwischen Sonotrode 22 und thermoplastischem Element 20 laufend nach apikal, wodurch auch der koronale Bereich des Hohlraums im Wesentlichen frei von thermoplastischem Material bleibt und nach Entfernen der Sonotrode dem Einführen eines Befestigungspfostens des Abutments dienen kann. Je nach Schwingungsverhältnissen und Länge des thermoplastischen Elements 20 kann sogar vorgesehen sein, dass der koronale Bereich des Hohlraums, bspw. insbesondere im Bereich der Aufweitung (und in den nachstehenden Ausführungsformen auch in Bereichen, die der Verankerung apikal davon dienen) nie in Kontakt mit verflüssigtem thermoplastischem Material kommt.

Die verflüssigten, in den Knochen gepressten Anteile 21 des thermoplastischen Materials sorgen nach einer Wieder-Verfestigung nachdem der Energieeintrag gestoppt wurde für eine zusätzliche Verankerung des Implantatkörpers 1 und somit des ganzen Implantats im Knochengewebe 10 und sichern dieses insbesondere gegen ein ungewünschtes Herausschrauben oder Herausrütteln. Während der Einheilphase bietet diese Verankerung eine genügende Primärstabilität.

Das thermoplastische Material des thermoplastischen Elements kann gemäss einer ersten Möglichkeit resorbierbar sein und also nach einigen Monaten, wenn das Implantat eingeheilt ist, vom Körper resorbiert werden, woraufhin der Knochen durch die Austrittsöffnungen 4 ins Innere des Implantkörpers 1 wachsen und so einen weiteren Beitrag zur Verankerung liefern kann. Verwendbare resorbierbare Polymere sind beispielsweise Polylactide, die auch für Anwendungen in der Chirurgie kommerziell erhältlich sind.

Gemäss einer zweiten Möglichkeit kann das thermoplastische Element nicht resorbierbar sein. Dann bleibt der Anteil des thermoplastischen Materials an der Verankerung dauerhaft bestehen. Ein verwendbares nicht resorbierbare Polymer ist bspw. PMMA oder ein Polyamid.

Das in Figur 2 dargestellte Abutment 30 weist nebst dem Befestigungspfosten 31 einen koronalen Pfosten 34 zur Befestigung einer Suprakonstruktion auf. Apikal davon ist ein beispielsweise an den erwarteten Verlauf der Gingiva angepasster transgingivaler Bereich 33 ausgebildet. Die Formen sowohl eines solchen transgingivalen Bereichs 33 als auch des Pfostens 34, inklusive dessen Winkel zum Befestigungspfosten 31 und mithin zur Achse 13 sind angepasst an spezifische Bedürfnisse und hängen davon ab, wo im Kiefer das Implantat gesetzt wird oder gesetzt worden ist. Insbesondere kann ein Implantations-Set mit mindestens einem Implantat mehrere verschiedene Abutments für verschiedene Implantatsionssituationen umfassen.

Am Befestigungspfosten 31 kann eine Verdrehsicherungsstruktur 32 ausgebildet sein. Eine solche Verdrehsicherungsstruktur 32 weist eine in den nicht drehsymmetrischen Bereich des Implantats passende äussere Struktur auf und fixiert den Drehwinkel des Abutments relativ zum Kieferknochen. Ganz generell ist das Abutment insbesondere durch eine Bewegung in axialer Richtung, ohne substantielle Rotation, auf das implantierte Implantat aufsetzbar.

Im Beispiel gemäss Figuren 1 und 2 erfolgt eine Befestigung des Abutments am Implantat, insbesondere am Implantatkörper wie an sich bekannt durch Kleben. Der verwendete Kleber kann auch verwendet werden, um freie Bereiche des Hohlraums apikal des Bereichs, in welchen der Befestigungspfosten 31eindringt, zu füllen.

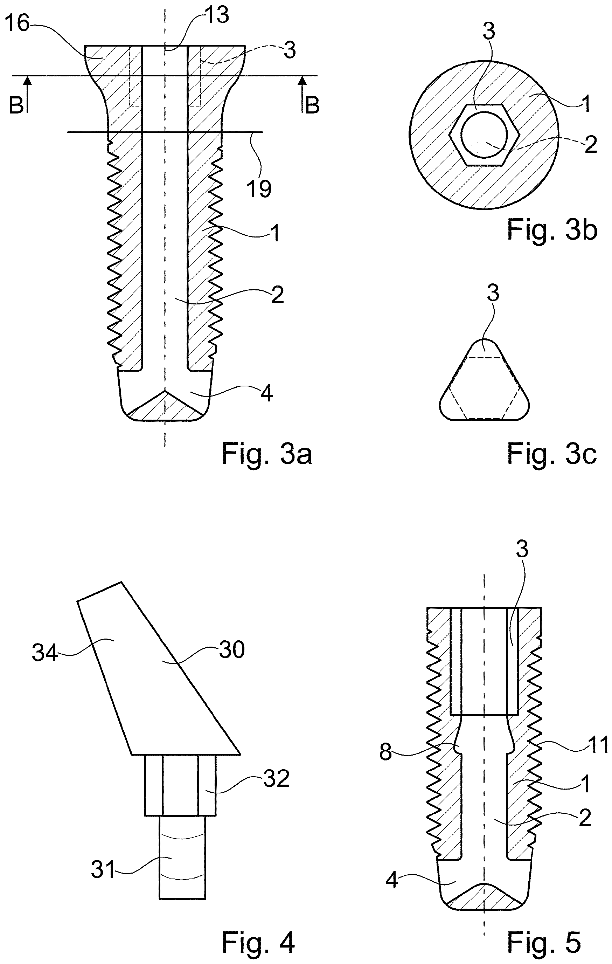

Die Ausführungsform der **Figuren 3a und 3b** (in welchen das thermoplastische Element des Implantats nicht dargestellt ist) sowie **Figur 4** unterscheidet sich von derjenigen der Figuren 1 und 2 dadurch, dass das Implantat des immer noch zweiteiligen Dentalimplantatsystems transgingival ausgebildet ist, d.h. ein "tissue level"-Implantat ist.

Zu diesem Zweck weist es koronal des mit dem Aussengewinde 11 versehenen und unter Umständen aufgerauhten und/oder beschichteten enossalen Bereichs einen transgingivalen Bereich aufweist (Linie 19 zeigt das ungefähre Niveau des Knochenkammes), in welchem das Implantat hier leicht auskragt. Fig. 3b, welche sehr schematisch eine Darstellung des Entlang der Ebene B-B in Fig. 3a geschnittenen Implantats darstellt, zeigt die Aufweitung 3 als im Querschnitt hexagonal, wodurch das Abutment mit der entsprechenden hexagonalen Verdrehsicherungsstruktur 32 in sechs verschiedenen relativen Orientierungen eingesetzt werden kann.

In der dargestellten Ausführungsform ist das Abutment ausserdem mit einem abgewinkelten koronalen Pfosten 34 gezeichnet; unabhängig von der Ausgestaltung des Implantats als subgingivales oder transgingivales Implantat und unabhängig von der Art der Befestigung kann das Abutment an die Position am Kiefer und die gewünschte Zahnstellung angepasst ausgestaltet sein.

In allen Ausführungsformen kann der Hohlraum 2 optional im koronalen Bereich ergänzend oder alternativ zu einem nicht rotationssymmetrischen Bereich (Eindrehgeometrie- und/oder Verdrehsicherungsbereich) auch einen Abstützbereich aufweisen, der einen sich nach koronal leicht vergrössernden Durchmesser aufweist und durch welchen Kräfte in axialer Richtung von der Suprakonstruktion, gegebenenfalls über das Abutment, in das eigentliche Implantat eingeleitet werden können. Ein solcher Abstützbereich kann bspw. konisch ausgebildet sein und bspw. koronal des Eindrehgeometriebereichs liegen. Mögliche Ausgestaltungen von Bereichen eines nach koronal offenen Hohlraums im Implantat und seinen Funktionsweisen im Zusammenhang mit einem Zusammenwirken mit einem Eindrehwerkzeug und mit der Befestigung des Abutments sind bspw. in der schweizerischen Patentanmeldung 01 786/15 beschrieben, auf die hier ausdrücklich Bezug genommen wird. Das Vorgehen der vorliegenden Erfindung ermöglicht, die Funktionen der dort beschriebenen Ausnehmung und generell von Ausnehmungen zur Befestigung eines Abutments oder einer Suprakonstruktion mit der Funktion des Hohlraums zum Aufnehmen des thermoplastischen Elements und zum Einführen der Sonotrode zwecks Beaufschlagung mit mechanischer Energie zu kombinieren.

**Figur 3c** zeigt einen zu Fig. 3b alternativen Querschnitt der Aufweitung 3 im Verdrehsicherungsbereich, welche insbesondere bei Implantatkörpern aus keramischen Materialien von Vorteil sein kann, weil sie eine bessere Verteilung der Kräfte, die beim Eindrehen durch das Eindrehwerkzeug ausgeübt werden, ermöglicht. Die gepunktete Kontur in Fig. 3c illustriert, dass auch in eine solche n-zählige, hier dreizählige, Struktur eine 2*n-zählige (oder 3*n-zählige, etc.) Struktur eines Abutments zusammenwirken kann, um bspw. eine grössere Anzahl von relativen Orientierungen zuzulassen.

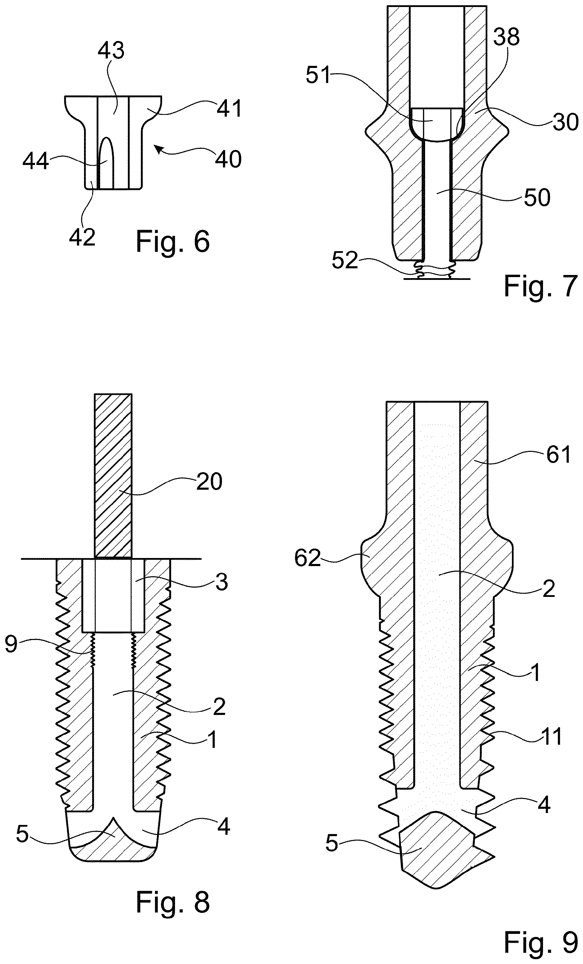

**Figur 5** zeigt eine weitere Ausgestaltung eines Implantkörpers 1, wie sie insbesondere für keramische Implantatkörper sinnvoll ist. Der Hohlraum bildet im koronlen Bereich eine Aufweitung 3 der vorstehend beschriebenen Art mit nichtrotationssymmetrischem Querschnitt. Im Unterschied zur gezeichneten Ausführungsform kann zusätzlich auch ein Abstützbereich der erwähnten Art gebildet werden, bspw. koronal des nicht-rotationssymmetrischen Bereichs, wie in der schweizerischen Patentanmeldung 01 786/15 beschrieben. Weiter bildet die Ausnehmung einen hinterschnittenen Einsatzelementbereich, der sich hier leicht zur apikalen Seite hin konisch erweitert. Dieser dient der auf axialen Zug gesicherten Verankerung eines Einsatzelements 40 wie bspw. in **Figur 6** gezeichnet.

Ein solches Einsatzelement kann mit seinem apikalen Ende in den hinterschnittenen Einsatzelementbereich eingeführt werden, indem sein apikales Ende aufgrund von Schlitzen 44, welche mehrere Segmente 42 voneinander trennen, deformiert werden kann. Zentral erstreckt sich eine in axialer Richtung verlaufende Durchgangsöffnung 43 mit Innengewindefunktion, d.h. mit Innengewinde oder mindestens mit einer nach innen ragenden Kante, die mit einem Aussengewinde zusammenwirkt. Ein koronaler Kopfbereich 41 ist nicht drehsymmetrisch, sondern in seiner Aussenkontur der Geoetrie des nicht-rotationssymmetrischen Bereichs angepasst, so dass das Einsatzelement verdrehsicher eingesetzt werden kann. Durch Einschrauben einer Abutmentschraube (oder auch einer entsprechenden Schraube eines Eindrehwerkzeugs) können die Segmente im aufgespreizten Zustand fixiert werden, wodurch das Einsatzelement und entsprechend die eingeschraubte Abutment- oder Werkzeugschraube aufgrund des Hinterschnittes gegen Zug in koronaler Richtung gesichert sind.

**Figur 7** zeigt schematisch ein Abutment 30 mit einer Abutmentschraube 50 mit Abutmentschraubengewinde 52 und einer durchgehenden Öffnung für die Abutmentschraube, wobei ein Kopf der Schraube im eingeschraubten Zustand der Abutmentschraube gegen eine in der durchgehenden Öffnung ausgebildete Schulter 38 gedrückt wird und so das Abutment gegenüber dem Implantat fixiert. Eine solche Konstruktion dient bspw. der Befestigung des Abutments, durch Zusammenwirken des Abutmentschraubengewindes 52 mit der Durchgangsöffnung 43 des Einsatzelements 40. Alternativ kann die Abutmentschraube auch direkt am Implantat festgeschraubt werden, was insbesondere für metallische Implantate an sich bekannt ist aber auch für keramische Implantate mit entsprechender Festigkeit nicht ausgeschlossen wird.

**Figur 8** zeigt schematisch ein entsprechendes Implantat eines zweiteiligen Implantatsystems (am Beispiel eines subgingivalen Implantats). Der Hohlraum 2 weist einen Bereich mit einem Innengewinde 9 auf, hier zwischen der Aufweitung 3 und dem bspw. auch in den anderen Ausführungsformen vorhandene und dort gezeichnete apikalen zylindrischen Bereich, welcher in die Austrittsöffnungen 4 mündet.

**Figur 9** zeigt einen Implantatkörper 1 eines Dentalimplantats für ein einteiliges Dentalimplantatsystem. Das thermoplastische Element 20 ist nicht gezeichnet, kann aber analog zu den thermoplastischen Elementen für zweiteilige Systeme ausgebildet sein. Das Dentalimplantat weist neben anhand der vorstehenden Ausführungsformen beschriebenen Merkmalen einen koronalen Pfosten 61 zur Befestigung einer Suprakonstruktion sowie eine Auskragung 62 zur Abstützung der Suprakonstruktion und/oder zur Kompression des Zahnfleischs auf. Der Hohlraum 2 erstreckt sich axial durch den Pfosten 61 hindurch.

Bei einer Ausführungsformen für einteilige Dentalimplantatsysteme mit abgewinkeltem Pfosten kann sich der Hohlraum auch durch bloss einen Teil des Pfostens hindurch erstrecken.

Optional kann der Implantologe oder Zahnarzt bei einem einteiligen Dentalimplantatsystem nach der zusätzlichen Verankerung durch das thermoplastische Material und vor der Befestigung der Suprakonstruktion den Hohlraum 2 von koronal her mit einem geeigneten Füller auffüllen, bspw. mit einem Zement.

Ein weiteres Merkmal des Implantats gemäss Fig. 9 ist unabhängig davon ob das Implantatsystem einteilig oder zweiteilig ist auch in beliebigen anderen Ausführungsformen der Erfindung realisierbar: während die Implantatkörper der vorstehend diskutierten Ausführungsformen alle im enossalen Bereich im Wesentlichen zylindrisch sind, ist das bei Fig. 9 nicht der Fall. Vielmehr ist der Implantatköper im Wesentlichen konisch, mit einer sich nach apikal verjüngenden Aussenkontur.

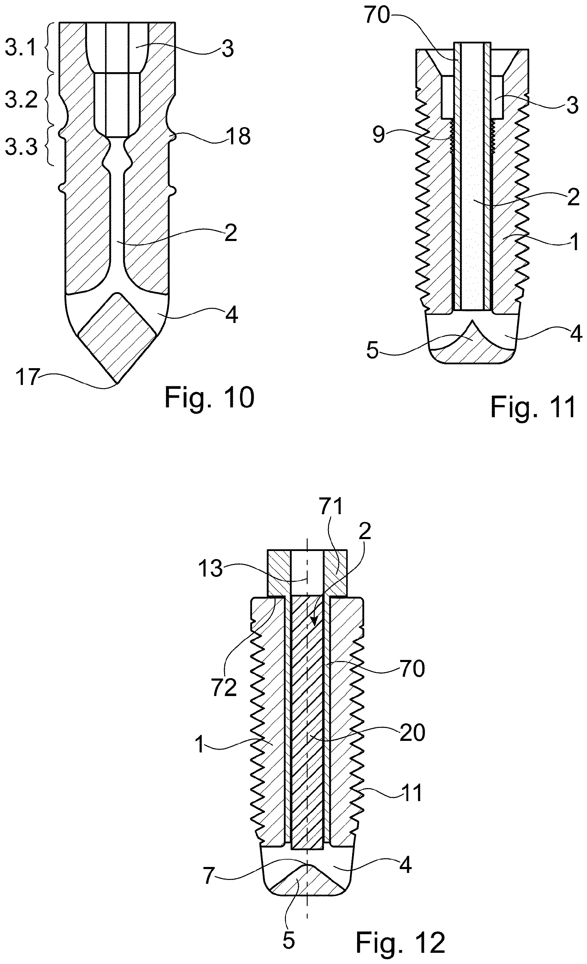

**Figur 10** zeigt einen Implantatkörper, hier für ein zweiteiliges Implantatsystem, welcher kein Aussengewinde aufweist. Im dargestellten Beispiel ist das Implantat dafür nach apikal leicht zugespitzt (Spitze 17) und weist leicht vorstehende Rippen 18 auf, die im gezeichneten Ausführungsbeispiel in Umfangsrichtung verlaufen. Ergänzend oder alternativ kommen auch axial verlaufende Rippen in Frage, die ausserdem etwas weiter vorstehen können als in Umfangsrichtung verlaufende Rippen.

Im gezeichneten Beispiel ist auch eine Struktur zur Befestigung des Abutments, welche im Hohlraum 2 ausgebildet ist, noch einmal dargestellt. Die Aufweitung 3 bildet hier drei Bereiche: einen Abstützbereich 3.1, einen Verdrehsicherungsbereich 3.2 mit einer nicht um die Achse rotationssymmetrischen Struktur, und einen hinterschnittenen Bereich 3.3, hier zur Befestigung eines Einsatzelements der vorstehend beschriebenen Art.

Alle drei Bereiche sind optional. Der Verdrehsicherungsbereich dient bei diesem Implantat nicht dem Eingreifen eines Eindrehwerkzeugs, da ein solches gar nicht benötigt wird. Trotzdem kann ein Verdrehsicherungsbereich sinnvoll sein, insbesondere wenn die Verdrehsicherungswirkung zwischen Implantat und Abutment (oder Suprakonstruktion) der Pressung im Abstützbereich 3.1 nicht ausreicht oder ein solcher Abstützbereich nicht vorhanden ist; analog bei geklebten Systemen wenn die Verdrehsicherungswirkung der Klebeverbindung nicht ausreicht.

**Figur 11** zeigt ein Implantat bei dem der Hohlraum 2 hier ähnlich ausgestaltet ist wie beim Implantat nach Fig. 10 mit einer eingeführten Führungshülse 70. Eine solche besteht aus einem Material oder Materialien, das/die unter den während der Implantation herrschenden Bedingungen nicht verflüssigbar ist/sind - bspw. einem Metall oder einem duroplastischen Kunststoff oder einem Kunststoff mit sehr hoher Verflüssigungstemperatur, bspw. PEEK. Im Innern der Führungshülse 70 sind das thermoplastische Element und das distale Ende der Sonotrode führbar. Die Führungshülse kann sich wie gezeichnet im Wesentlichen über die ganze axiale Länge des Hohlraums erstrecken, oder sie kann bspw. auch nur einen koronalen Bereich dieser schützen, bspw. den Bereich der Aufweitung 3, was nachstehend noch illustriert wird.

**Figur 12** illustriert, anhand einer andere Ausführungsform eines Implantatkörpers, dass die Führungshülse eine koronale Aufweitung aufweisen kann, welch hier eine Schulter 72 bildet, durch welche die Führungshülse am Implantatkörper abstützbar ist, wodurch für den Implantologen beim Einführen die axiale Position definiert ist und verhindert wird, dass die Partie apikal der Abstützung die Austrittsöffnungen 4 verdecken kann.

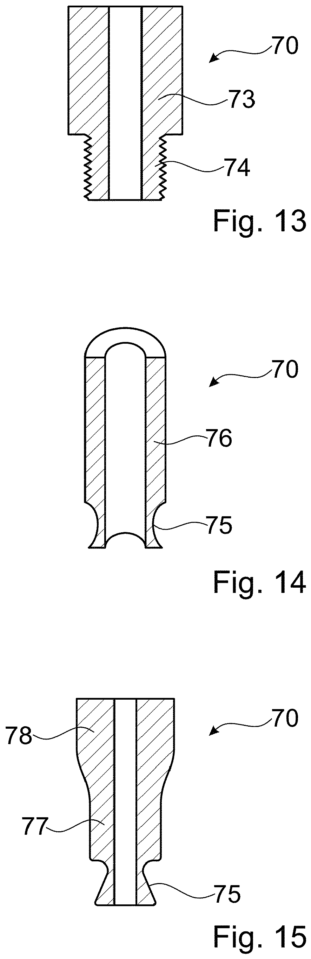

**Figur 13** zeigt eine Variante der Führungshülse 70, welche zwei voneinander unabhängige optionale Merkmale kombiniert:
- Erstens weist die Führungshülse ein Aussengewinde 74 als Beispiel für eine hinterschnittene Struktur auf, welche mit einer entsprechenden Struktur (hier: Innengewinde) des Implantatkörpers zusammenwirkt, um die Führungshülse relativ zum Implantatkörper in Bezug auf axiale Richtungen zu fixieren.
- Zweitens ist die axiale Ausdehnung der Führungshülse auf den Bereich der Aufweitung des Hohlraums beschränkt, schützt also insbesondere diese und führt im Bereich dieser. Apikal der Führungshülse können das thermoplastische Element und/oder die Sonotrode direkt durch den Hohlraum geführt sein.

Im Beispiel gemäss Fig. 13 passt die Führungshülse insbesondere zu einem Implantatkörper der in Fig. 8 oder auch der in Fig. 5 (dann mit Einsatzelement) illustrierten Art, weshalb es auch koronal der hinterschnittenen Struktur (Aussengewinde 74) eine Aufweitung 73 ausbildet, durch welche sie zusätzlich abgestützt wird und welche die Einschraubbewegung begrenzt und so das Innengewinde des Implantatkörpers beim Einbringen der Führungshülse schützt. Der Querschnitt der Aufweitung 73 kann auf geeignete Weise auf den Querschnitt der Aufweitung 3 des Hohlraums abgestimmt sein, wobei bei einer einzuschraubenden Hülse die Verdrehsicherungsstruktur selbstverständlich nicht vorhanden sein wird.

Die Variante der Führungshülse 70 gemäss **Figur 14** ist auf einen Implantatkörper der in Fig. 5 (ohne Einsatzelement) gezeigten Art abgestimmt und weist eine einclickbare hinterschnittene Struktur 75 auf, nebst einem aufgeweiteten Bereich 76. Auch diese Variante kann - wie die vorstehend beschriebene - abweichend vom Gezeichneten optional apikal der hinterschnittenen Struktur weitergeführt sein und sich bis zu im Wesentlichen über den ganzen Bereich bis zu den Austrittsöffnungen erstrecken.

Das gilt auch für die Variante gemäss **Figur 15****,** welche im Übrigen abgestimmt auf einen Hohlraum wie in Fig. 10 gezeichnet drei Bereiche aufweist, eine hinterschnittene Struktur 75, einen mittleren Bereich 77 und einen koronalen Abstützbereich 78.

Bei Führungshülsen, die durch eine bloss axiale Bewegung in den Hohlraum einführbar sind, wie das in den Ausführungsformen gemäss Fig. 14 und gemäss Fig. 15 der Fall ist, kann optional ein entsprechender Bereich (bspw. der mittlere Bereich 77 in Fig. 15) in seiner äusseren Form auf eine Eindrehgeometrie des Implantatkörpers abgestimmt und also auch verdrehgesichert sein.

## Patentansprüche

1. Implantationsset, aufweisend
ein Dentalimplantat mit
• einem Implantatkörper (1), welcher sich zwischen einem koronalen und einem apikalen Ende erstreckt und eine enossale Aussenfläche definiert, wobei der Implantatkörper einen nach koronal offenen Hohlraum (2) sowie mindestens eine Austrittsöffnung (4) von einem Innern zur enossalen Aussenfläche aufweist,
• und einem thermoplastischen Element (20) im Festzustand, welches im Hohlraum angeordnet oder in diesen einbringbar ist, wobei das thermoplastische Element durch Anlegen einer nach apikal in den Hohlraum hinein gerichteten Presskraft und von mechanischen Schwingungen in einen mindestens teilweise fliessfähigen Zustand bringbar ist und in diesem Zustand mindestens ein Anteil von fliessfähigem Material des thermoplastischen Elements aufgrund der Presskraft durch den mindestens eine Austrittsöffnung (4) in umgebendes Knochengewebe pressbar ist, wenn der Implantatkörper in einer Öffnung im Knochengewebe angeordnet und die enossale Aussenfläche mit Knochengewebe in Kontakt ist,
sowie eine Führungshülse (70), welche in den Hohlraum (2) einbringbar oder in diesem angeordnet ist und welche das im Hohlraum angeordnete bzw. in den Hohlraum eingebrachte thermoplastische Element mindestens bereichsweise umgibt.

2. Implantationsset nach Anspruch 1, wobei die Führungshülse eine koronale Aufweitung (71, 73, 76, 77, 78) ausbildet, durch welche sie am Implantat abstützbar ist.

3. Implantationsset nach Anspruch 1 oder 2, wobei die Führungshülse eine hinterschnittene Struktur (74, 75) aufweist, um in eine entsprechende hinterschnittene Struktur (3.3, 8, 9) des Implantatkörpers einzugreifen.

4. Implantationsset nach einem der Ansprüche 1-3, wobei ein durchgehendes Innenvolumen der Führungshülse einen entlang einer koronal-apikalen Achse konstanten Querschnitt aufweist.

5. Implantationsset nach Anspruch 4, wobei da Innenvolumen einen kreisrunden Querschnitt aufweist.

6. Implantationsset nach einem der Ansprüche 1-5, aufweisend ein Eindrehwerkzeug, welches ausgebildet ist, in einen nicht drehsymmetrischen Bereich des Hohlraums (2) einzugreifen um den Implantatkörper (1) durch eine Schraubbewegung in den Kieferknochen einzuschrauben.

7. Implantationsset nach einem der Ansprüche 1-6, aufweisend eine Sonotrode (22), welche ausgeformt ist, von koronal her in den Hohlraum einzugreifen und die mechanischen Schwingungen sowie die Presskraft anzulegen.

8. Implantationsset nach Anspruch 7, wobei die Sonotrode einen distalen Bereich aufweist, dessen Form auf die Führungshülse abgestimmt ist.

9. Implantationsset nach einem der vorangehenden Ansprüche, wobei der Implantatkörper ein Aussengewinde (11) sowie eine Befestigungsstruktur (3, 61, 62) zur Befestigung eines Abutments oder einer Suprakonstruktion aufweist.

10. Implantationsset nach einem der Ansprüche 1-8, wobei der Implantatkörper (1) eine Befestigungsstruktur (3, 61, 62) zur Befestigung eines Abutments oder einer Suprakonstruktion aufweist, welche mindestens teilweise im Hohlraum (2) vorhanden ist und/oder durch diesen durchdrungen wird.

11. Implantationsset nach Anspruch 9 oder 10, das als Teil eines zweiteiligen Implantatsystems ausgebildet ist, wobei die Befestigungsstruktur (3) zur Befestigung eines Abutments (30) ausgebildet ist und mindestens teilweise im Hohlraum (2) ausgebildet ist, derart, dass die Befestigung den Eingriff eines Befestigungspfostens (31) des Abutments in den Hohlraum (2) voraussetzt.

12. Implantationsset nach einem der Ansprüche 9-11, wobei der Hohlraum zum Zweck der Befestigung eines Abutments oder einer Suprakonstruktion eine Bezug auf axiale Richtungen hinterschnitten Struktur (3.3, 8, 9) aufweist, welche eine Sicherung des Abutments bzw. der Suprakonstruktion auf Zug in axiale Richtungen ermöglicht.

13. Implantationsset nach einem der Ansprüche 9-12, wobei der Hohlraum (2) einen Abstützbereich (3.1) bildet, in welchem sie einen sich nach koronal vergrössernden Querschnitt aufweist.

14. Implantationsset nach einem der Ansprüche 9-13, wobei der Hohlraum einen Eindrehgeometrie- und/oder Verdrehsicherungsbereich (3.2) ausbildet, in welchem sie in Bezug auf Drehungen um eine Hohlraumachse nicht drehsymmetrisch ist.

15. Implantationsset nach einem der Ansprüche 9-14, wobei der Hohlraum (2) apikal der Austrittsöffnung (4) durch eine Anstosspartie (5) begrenzt ist, die einen Energierichtungsgeber (7) bildet.

## Claims

1. implantation set, comprising
a dental implant having
• an implant body (1) extending between a coronal and an apical end and defining an endosseous outer surface, the implant body having a cavity (2) open in a coronal direction and at least one exit opening (4) from an interior to the endosseous outer surface
• and a thermoplastic element (20) in the solid state, which is arranged in the cavity or can be introduced into it, wherein the thermoplastic element can be brought into an at least partially flowable state by the application of a pressing force directed apically into the cavity and of mechanical vibrations, and in this state at least a proportion of flowable material of the thermoplastic element can be pressed through the at least one outlet opening (4) into surrounding bone tissue as a result of the pressing force, when the implant body is arranged in an opening in the bone tissue and the endosseous outer surface is in contact with bone tissue
as well as a guide sleeve (70) which can be inserted into or is arranged in the cavity (2) and which surrounds the thermoplastic element arranged in the cavity or inserted into the cavity at least in certain regions.

2. Implantation set according to claim 1, wherein the guide sleeve forms a coronal widening (71, 73, 76, 77, 78) by which it can be supported on the implant.

3. Implantation set according to claim 1 or 2, wherein the guide sleeve comprises an undercut structure (74, 75) for engaging a corresponding undercut structure (3.3, 8, 9) of the implant body.

4. Implantation set according to any one of claims 1-3, wherein a continuous inner volume of the guide sleeve has a constant cross-section along a coronal-apical axis.

5. Implantation set according to claim 4, wherein the inner volume has a circular cross-section.

6. Implantation set according to any one of claims 1-5, comprising a screwing-in tool adapted to engage a non-rotationally symmetrical region of the cavity (2) to screw the implant body (1) into the jawbone by a screwing movement.

7. Implantation set according to any one of claims 1-6, comprising a sonotrode (22) shaped to engage the cavity from coronally and to apply the mechanical vibrations and the pressing force.

8. Implantation set according to claim 7, wherein the sonotrode has a distal region, the shape of which is adapted to the guide sleeve.

9. Implantation set according to one of the preceding claims, wherein the implant body has an external thread (11) as well as a fastening structure (3, 61, 62) for fastening an abutment or a superstructure.

10. Implantation set according to any one of claims 1-8, wherein the implant body (1) comprises a fastening structure (3, 61, 62) for fastening an abutment or a superstructure, which is at least partially present in and/or penetrated by the cavity (2).

11. Implantation set according to claim 9 or 10, which is formed as part of a two-part implant system, wherein the fastening structure (3) is formed for fastening an abutment (30) and is formed at least partially in the cavity (2), such that the fastening requires engagement of a fastening post (31) of the abutment in the cavity (2).

12. Implantation set according to any one of claims 9-11, wherein the cavity for the purpose of fixing an abutment or a superstructure has a structure (3.3, 8, 9) which is undercut with respect to axial directions and which enables the abutment or the superstructure to be secured against traction in axial directions.

13. Implantation set according to any one of claims 9-12, wherein the cavity (2) forms a support region (3.1) in which it has a cross-section which increases in a coronal direction.

14. Implantation set according to any one of claims 9-13, wherein the cavity forms an insertion geometry and/or anti-rotation region (3.2) in which it is not rotationally symmetrical with respect to rotations about a cavity axis.

15. Implantation set according to any one of claims 9-14, wherein the cavity (2) is delimited apically of the exit opening (4) by an abutment portion (5) forming an energy direction generator (7).

## Revendications

1. Kit d'implantation, comprenant
un implant dentaire comprenant
• un corps d'implant (1) s'étendant entre une extrémité coronale et une extrémité apicale et définissant une surface extérieure endo-osseuse, le corps d'implant présentant une cavité (2) ouverte vers la couronne et au moins une ouverture de sortie (4) d'un intérieur vers la surface extérieure endo-osseuse,
• et un élément thermoplastique (20) à l'état solide, qui est disposé dans la cavité ou peut être introduit dans celle-ci, l'élément thermoplastique pouvant être amené dans un état au moins partiellement fluide par l'application d'une force de compression dirigée vers l'apical dans la cavité et de vibrations mécaniques et, dans cet état, au moins une partie du matériau fluide de l'élément thermoplastique pouvant être comprimée dans le tissu osseux environnant en raison de la force de compression à travers l'au moins une ouverture de sortie (4), lorsque le corps de l'implant est placé dans une ouverture du tissu osseux et que la surface extérieure endo-osseuse est en contact avec le tissu osseux,
ainsi qu'une douille de guidage (70) qui peut être introduite dans la cavité (2) ou qui est disposée dans celle-ci et qui entoure au moins par endroits l'élément thermoplastique disposé dans la cavité ou introduit dans la cavité.

2. Kit d'implantation selon la revendication 1, dans lequel la douille de guidage forme un élargissement coronal (71, 73, 76, 77, 78) par lequel elle peut s'appuyer sur l'implant.

3. Kit d'implantation selon la revendication 1 ou 2, dans lequel le manchon de guidage présente une structure en contre-dépouille (74, 75) destinée à s'engager dans une structure en contre-dépouille correspondante (3.3, 8, 9) du corps de l'implant.

4. Kit d'implantation selon l'une quelconque des revendications 1-3, dans lequel un volume interne continu du manchon de guidage présente une section transversale constante le long d'un axe corono-apical.

5. Kit d'implantation selon la revendication 4, dans lequel le volume intérieur présente une section circulaire.

6. Kit d'implantation selon l'une des revendications 1 à 5, comprenant un outil de vissage conçu pour s'engager dans une zone non symétrique en rotation de la cavité (2) afin de visser le corps de l'implant (1) dans l'os de la mâchoire par un mouvement de vissage.

7. Kit d'implantation selon l'une des revendications 1 à 6, comprenant une sonotrode (22) configurée pour s'engager dans la cavité par voie coronale et appliquer les vibrations mécaniques et la force de pression.

8. Kit d'implantation selon la revendication 7, dans lequel la sonotrode présente une zone distale dont la forme est adaptée à la douille de guidage.

9. Kit d'implantation selon l'une des revendications précédentes, dans lequel le corps de l'implant présente un filetage extérieur (11) ainsi qu'une structure de fixation (3, 61, 62) pour la fixation d'un pilier ou d'une superstructure.

10. Kit d'implantation selon l'une des revendications 1 à 8, dans lequel le corps d'implant (1) présente une structure de fixation (3, 61, 62) pour la fixation d'un pilier ou d'une superstructure, qui est au moins partiellement présente dans la cavité (2) et/ou est traversée par celle-ci.

11. Kit d'implantation selon la revendication 9 ou 10, qui est réalisé en tant que partie d'un système d'implant en deux parties, la structure de fixation (3) étant réalisée pour la fixation d'un pilier (30) et étant réalisée au moins partiellement dans la cavité (2), de telle sorte que la fixation suppose l'engagement d'un pilier de fixation (31) du pilier dans la cavité (2).

12. Kit d'implantation selon l'une des revendications 9 à 11, dans lequel la cavité présente, en vue de la fixation d'un pilier ou d'une superstructure, une structure (3.3, 8, 9) en contre-dépouille par rapport à des directions axiales, permettant un blocage du pilier ou de la superstructure en traction dans des directions axiales.

13. Kit d'implantation selon l'une des revendications 9 à 12, dans lequel la cavité (2) forme une zone d'appui (3.1) dans laquelle elle présente une section transversale qui s'élargit vers la couronne.

14. Kit d'implantation selon l'une quelconque des revendications 9 à 13, dans lequel la cavité forme une zone de géométrie de vissage et/ou de blocage en rotation (3.2) dans laquelle elle n'est pas symétrique en rotation par rapport aux rotations autour d'un axe de la cavité.

15. Kit d'implantation selon l'une quelconque des revendications 9 à 14, dans lequel la cavité (2) est délimitée apicalement par rapport à l'orifice de sortie (4) par une partie d'impact (5) formant un générateur de direction d'énergie (7).
